# EUROPEAN PATENT APPLICATION

(11) **EP 3 667 585 A1**
(43) Date of publication of application: **17.06.2020**
(21) Application number: 18843280.1
(22) Date of filing: 11.06.2018
(51) Int. Cl.: G06Q 10/10

(54) **CALLING CARD INFORMATION MANAGEMENT SYSTEM AND CALLING CARD INFORMATION MANAGEMENT PROGRAM**

(30) Priority: 09.08.2017 JP 2017154839
(71) Applicant: Mark Inc., Kawasaki-shi, Kanagawa 212-0014 (JP)
(72) Inventor: HOSOKI, Masayoshi, Kawasaki-shi Kanagawa 212-0014 (JP)
(74) Representative: Dennemeyer & Associates S.A.
(86) International application number: PCT/JP2018/022216
(87) International publication number: WO 2019/031053

(57) **Abstract**

A business card information management system that is preferable for realizing a business card that assures the authenticity of a user and that is more appealing is provided. A company and its members are authenticated. Business card information of the members of the authenticated company is registered in tables 400 to 460. Based on a business card ID, a two-dimensional barcode is generated. The generated two-dimensional barcode is printed on the business card. A mobile terminal 210 reads the business card ID from the two-dimensional barcode printed on the business card, the business card information correlated with the read business card ID is searched from the tables 400 to 460, and the obtained business card information is provided to the mobile terminal 210. Business card exchange information expressing a relation of the member whom the business card is exchanged with is registered in a business card exchange information table 480. Based on the business card exchange information in the business card exchange information table 480, the correlation of the business card information and business card back information in the tables 400 to 460 is updated.

## Description

### TECHNICAL FIELD

The present invention relates to a system and a program for managing business card information. The present invention particularly relates to a business card information management system and a business card information management program that are preferable for realizing a business card that assures the authenticity of a user and that is more appealing.

### BACKGROUND ART

One example of the conventionally known techniques of managing business card information is disclosed in Patent Literature 1.

According to the technique disclosed in Patent Literature 1, a mobile terminal reads identification information from a two-dimensional barcode printed on a business card. Then, an acquisition request including the read identification information is transmitted to a server. Next, the server transmits to the terminal, personal information that is correlated with the identification information and that is stored in a storage unit. Then, the terminal displays the personal information received from the server.

### CITATION LIST

### PATENT LITERATURE

PATENT LITERATURE 1: JP-A-2016-189147

### SUMMARY OF THE INVENTION

### PROBLEMS TO BE SOLVED BY THE INVENTION

The technique disclosed in Patent Literature 1, however, has a problem that the information may be misused by a third party or a resignee who does not belong to a company (corporation or sole proprietorship) but has registered the personal information by pretending to be a member of the company.

A business card includes information such as a name or a company name. On the other hand, the business card also includes personal information including the user's information such as his hobby, which is managed and provided separately. These pieces of information are both fixed information. Therefore, the information on the business card does not necessarily appeal others with whom the user exchanges the business card. This is another problem of the conventional technique.

The present invention has been made in view of the above unsolved problems of the conventional technique. That is to say, an object of the present invention is to provide a business card information management system and a business card information management program that are preferable for realizing a business card that assures the authenticity of a user and that is more appealing.

### SOLUTIONS TO THE PROBLEMS

### [Invention 1]

In order to solve the above problem, a business card information management system of the invention 1 includes a company authenticating means of authenticating a company by comparison with company information in a company information storing means storing the company information; a member authenticating means of authenticating a member of the company that is authenticated by the company authenticating means; a business card information registering means of registering in a business card information storing means, business card information of the member that is authenticated by the member authenticating means; an identification information acquiring means of acquiring identification information correlated with the business card information in the business card information storing means; and a business card information searching means of searching the business card information storing means for the business card information correlated with the identification information acquired by the identification information acquiring means.

In such a structure, before the business card information is registered, two-step authentication is performed. First, the company authenticating means authenticates the company by comparison with the company information in the company information storing means. Second, the member authenticating means authenticates the member of the authenticated company. Then, the business card information registering means registers the business card information of the authenticated member in the business card information storing means.

Next, the identification information acquiring means acquires the identification information. Then, the business card information searching means searches the business card information storing means for the business card information correlated with the acquired identification information.

Here, the company refers to an organization that runs a business. This company may be either a natural person (for example, sole proprietor) or a corporation. This equally applies to the business card information management systems according to the inventions 3, 8 and 9, and the business card information management programs according to the inventions 10 to 13.

In addition, the company information storing means stores the company information by every means and at any time. The company information may be stored in advance in this company information storing means. Alternatively, the company information storing means may be configured to store the company information by, instead of storing the company information in advance, input of the company information from the outside when the present system is in operation. Other storing means may be similarly configured. Hereinafter, this point equally applies to the business card information management system according to the invention 3, and the business card information management programs according to the inventions 10 and 11.

The present system may be achieved as a single device or terminal, or another apparatus. Alternatively, the system may be achieved as a network system including a plurality of devices or terminals or other apparatuses that are connected in a manner that communication is possible. In the latter case, the components may belong to any apparatus and the like as long as the components are connected so that the communication is possible. Hereinafter, this point equally applies to the business card information management systems according to the inventions 3, 8, and 9.

### [Invention 2]

A business card information management system of invention 2 is the business card information management system of invention 1 further includes a business card information providing means of providing the business card information obtained by the business card information searching means.

In such a structure, the business card information providing means provides the obtained business card information.

### [Invention 3]

A business card information management system of invention 3 further includes a company authenticating means of authenticating a company by comparison with company information in a company information storing means storing the company information; a member authenticating means of authenticating a member of the company that is authenticated by the company authenticating means; a business card information registering means of registering in a business card information storing means, business card information of the member that is authenticated by the member authenticating means; an identification information generating means of generating identification information correlated with the business card information in the business card information storing means; an identification information acquiring means of acquiring from a business card use terminal, the identification information read from a business card medium in which the identification information generated by the identification information generating means is recorded; a business card information searching means of searching the business card information storing means for the business card information correlated with the identification information acquired by the identification information acquiring means; and a business card information providing means of providing the business card information obtained by the business card information searching means to the business card use terminal.

In such a structure, before the business card information is registered, two-step authentication is performed. First, the company authenticating means authenticates the company by comparison with the company information in the company information storing means. Second, the member authenticating means authenticates the member of the authenticated company. Then, the business card information registering means registers the business card information of the authenticated member in the business card information storing means.

Next, in a case of forming the business card medium, the identification information generating means generates the identification information correlated with the business card information in the business card information storing means. The generated identification information is, for example, recorded in the business card medium together with the business card information.

Next, the business card medium or the business card information recorded in the business card medium is provided or exchanged. In this case, the identification information is read from the business card medium in the business card use terminal. Then, the identification information acquiring means acquires the identification information from the business card use terminal. Next, the business card information searching means searches the business card information storing means for the business card information correlated with the acquired identification information. Then, the business card information providing means provides the obtained business card information to the business card use terminal. Thus, the business card use terminal can use the provided business card information.

Here, the business card medium includes, in addition to a business card made of paper, a recording medium and an information apparatus including the recorded business card information. Hereinafter, this point equally applies to the business card information management system according to the invention 9, and the business card information management programs according to the inventions 11 and 13.

### [Invention 4]

Further, a business card information management system of invention 4 is the business card information management system of invention 3, wherein: the business card information storing means stores the business card information while correlating the business card information with written information that is recorded in the business card medium in association with the business card information; and the business card information searching means and the business card information providing means search for and provide the business card information and the written information that is correlated with the business card information, the business card information management system comprising: a relation information registering means of registering in a relation information storing means, relation information expressing a relation of the member who provides or exchanges the business card medium or the business card information recorded in the business card medium on the basis of the identification information acquired by the identification information acquiring means; and an updating means of correlating the business card information and the written information in the business card information storing means, or updating the written information correlated with the business card information on the basis of the relation information in the relation information storing means.

In such a structure, when the identification information acquiring means has acquired the identification information, the business card information searching means searches the business card information storing means for the business card information and the written information that are correlated with the acquired identification information, and the business card information providing means provides the obtained business card information and written information to the business card use terminal.

In addition, when the identification information acquiring means has acquired the identification information, the relation information registering means registers in the relation information storing means, the relation information expressing the relation of the member who has provided or exchanged the business card medium or the like on the basis of the acquired identification information. Then, the updating means correlates the business card information and the written information or updates the written information correlated with the business card information in the business card information storing means on the basis of the relation information in the relation information storing means.

### [Invention 5]

Further, a business card information management system of invention 5 is the business card information management system of invention 4, wherein the updating means correlates the business card information of a target member with the written information regarding a member, a company of the member, or an attribute of the member of a person whom the target member provides the business card medium or the business card information recorded therein to or exchanges the business card medium or the business card information recorded therein with, or updates the written information correlated with the business card information so as to have a content regarding the member, the company, or the attribute of the person.

In such a structure, the updating means correlates the business card information of the target member with the written information regarding the member, the company, or the attribute of the person whom the target member has provided the business card medium or the like to or exchanged the business card medium or the like with. Alternatively, the written information correlated with the business card information is updated to have the content regarding the member, the company, or the attribute of the person.

### [Invention 6]

A business card information management system of invention 6 is the business card information management system of invention 5, further comprising a frequency calculating means of calculating a frequency of providing or exchanging the business card medium or the business card information for each member, company, or attribute of the person, wherein the updating means correlates the business card information of the target member with the written information regarding the member, the company, or the attribute of the person for which the frequency calculated by the frequency calculating means is the highest or more than or equal to a predetermined frequency, or updates the written information correlated with the business card information so as to have a content regarding the member, the company, or the attribute of the person for which the frequency calculated by the frequency calculating means is the highest or more than or equal to the predetermined frequency.

In such a structure, the frequency calculating means calculates the frequency of providing or exchanging the business card medium or the like for each member, company, or attribute of the person. Then, the updating means correlates the business card information of the target member with the written information regarding the member, the company, or the attribute of the person for which the calculated frequency is the highest or more than or equal to a predetermined frequency. Alternatively, the written information correlated with the business card information is updated to have the content regarding the member, the company, or the attribute of the person for which the calculated frequency is the highest or more than or equal to the predetermined frequency.

### [Invention 7]

A business card information management system of invention 7 is the business card information management system of any one of inventions 3 to 6, further comprising an authority changing means of changing an authority of the member so that the member cannot use the business card information in the business card use terminal after a predetermined time.

In such a structure, the authority changing means changes the authority of the member. Therefore, for example, the member who has resigned from the company cannot use the business card information with the business card use terminal after the resignation.

### [Invention 8]

A business card information management system of invention 8 further includes an identification information acquiring means of acquiring identification information correlated with business card information in a business card information storing means that stores the business card information and written information while correlating the business card information and the written information with each other; a relation information registering means of registering in a relation information storing means, relation information expressing a relation of a member who provides or exchanges the business card information on the basis of the identification information acquired by the identification information acquiring means; and an updating means of correlating the business card information and the written information in the business card information storing means, or updating the written information correlated with the business card information on the basis of the relation information in the relation information storing means.

In such a structure, when the identification information acquiring means has acquired the identification information, the relation information registering means registers the relation information expressing the relation of a person who has provided or exchanged the business card information in the relation information storing means on the basis of the acquired identification information. Then, the updating means updates the correlation of the business card information and the written information in the business card information storing means on the basis of the relation information in the relation information storing means. Alternatively, the written information correlated with the business card information is updated.

### [Invention 9]

A business card information management system of invention 9 further includes a business card information registering means of registering business card information of a member of a company in a business card information storing means while correlating the business card information with written information that is recorded in a business card medium in association with the business card information; an identification information generating means of generating identification information correlated with the business card information in the business card information storing means; an identification information acquiring means of acquiring from a business card use terminal, the identification information read from the business card medium in which the identification information generated by the identification information generating means is recorded; a business card information searching means of searching the business card information storing means for the business card information and the written information correlated with the identification information acquired by the identification information acquiring means; a business card information providing means of providing the business card information and the written information obtained by the business card information searching means to the business card use terminal; a relation information registering means of registering in a relation information storing means, relation information expressing a relation of the member who provides or exchanges the business card medium or the business card information recorded in the business card medium on the basis of the identification information acquired by the identification information acquiring means; and an updating means of correlating the business card information and the written information in the business card information storing means, or updating the written information correlated with the business card information on the basis of the relation information in the relation information storing means.

In such a structure, when the identification information acquiring means has acquired the identification information, the business card information searching means searches the business card information storing means for the business card information and the written information that are correlated with the acquired identification information. Then, the business card information providing means provides the obtained business card information and written information to the business card use terminal.

In addition, when the identification information acquiring means has acquired the identification information, the relation information registering means registers in the relation information storing means, the relation information expressing the relation of the member who has provided or exchanged the business card medium or the like on the basis of the acquired identification information. Then, the updating means updates the correlation of the business card information and the written information in the business card information storing means on the basis of the relation information in the relation information storing means. Alternatively, the written information correlated with the business card information is updated.

### [Invention 10]

In order to solve the above problem, a business card information management program of invention 10 for executing, by a computer, a process includes: a company authenticating step of authenticating a company by comparison with company information in a company information storing step storing the company information; a member authenticating step of authenticating a member of the company that is authenticated by the company authenticating step; a business card information registering step of registering in a business card information storing step, business card information of the member that is authenticated by the member authenticating step; an identification information acquiring step of acquiring identification information correlated with the business card information in the business card information storing step; and a business card information searching step of searching the business card information storing step for the business card information correlated with the identification information acquired by the identification information acquiring step.

In such a structure, the program is read by the computer. Then, in accordance with the read program, the computer executes the process. Then, the operation equivalent to that of the business card information management system according to the invention 1 can be obtained.

### [Invention 11]

A business card information management program of invention 11 for executing, by a computer, a process further includes: a company authenticating step of authenticating a company by comparison with company information in a company information storing step storing the company information; a member authenticating step of authenticating a member of the company that is authenticated by the company authenticating step; a business card information registering step of registering in a business card information storing step, business card information of the member that is authenticated by the member authenticating step; an identification information generating step of generating identification information correlated with the business card information in the business card information storing step; an identification information acquiring step of acquiring from a business card use terminal, the identification information read from a business card medium in which the identification information generated by the identification information generating step is recorded; a business card information searching step of searching the business card information storing step for the business card information correlated with the identification information acquired by the identification information acquiring step; and a business card information providing step of providing the business card information obtained by the business card information searching step to the business card use terminal.

In such a structure, the program is read by the computer. Then, in accordance with the read program, the computer executes the process. Then, the operation equivalent to that of the business card information management system according to the invention 3 can be obtained.

### [Invention 12]

A business card information management program of invention 12 for executing, by a computer, a process further includes: an identification information acquiring step of acquiring identification information correlated with business card information in a business card information storing step that stores the business card information and written information while correlating the business card information and the written information with each other; a relation information registering step of registering in a relation information storing step, relation information expressing a relation of a member who provides or exchanges the business card information on the basis of the identification information acquired by the identification information acquiring step; and an updating step of correlating the business card information and the written information in the business card information storing step, or updating the written information correlated with the business card information on the basis of the relation information in the relation information storing step.

In such a structure, the program is read by the computer. Then, in accordance with the read program, the computer executes the process. Then, the operation equivalent to that of the business card information management system according to the invention 8 can be obtained.

### [Invention 13]

A business card information management program of invention 13 for executing, by a computer, a process further includes: a business card information registering step of registering business card information of a member of a company in a business card information storing step while correlating the business card information with written information that is recorded in a business card medium in association with the business card information; an identification information generating step of generating identification information correlated with the business card information in the business card information storing step; an identification information acquiring step of acquiring from a business card use terminal, the identification information read from the business card medium in which the identification information generated by the identification information generating step is recorded; a business card information searching step of searching the business card information storing step for the business card information and the written information correlated with the identification information acquired by the identification information acquiring step; a business card information providing step of providing the business card information and the written information obtained by the business card information searching step to the business card use terminal; a relation information registering step of registering in a relation information storing step, relation information expressing a relation of the member who provides or exchanges the business card medium or the business card information recorded in the business card medium on the basis of the identification information acquired by the identification information acquiring step; and an updating step of correlating the business card information and the written information in the business card information storing step, or updating the written information correlated with the business card information on the basis of the relation information in the relation information storing step.

In such a structure, the program is read by the computer. Then, in accordance with the read program, the computer executes the process. Then, the operation equivalent to that of the business card information management system according to the invention 9 can be obtained.

### EFFECTS OF THE INVENTION

As described above, in the business card information management system according to the invention 1 or 3, or the business card information management program according to the invention 10 or 11, two-step authentication is performed to authenticate the company and the member of the company before the business card information is registered. Therefore, it is possible to reduce the possibility that a third party or a resignee who does not belong to the company but pretends to be the member of the company registers the business card information and misuses the information. Thus, the authenticity of the user can be assured as compared to the conventional technique. In addition, by comparing with the company information, the company can be authenticated. Therefore, the authenticating procedure is easy.

In addition, in the business card information management system according to the invention 4, 8, or 9, or the business card information management program according to the invention 12 or 13, as the business card medium or the like is provided or exchanged, the business card information and the written information are correlated or the written information correlated with the business card information is updated. Therefore, the written information can be evolved to have the content that is appealing to the persons whom the business card medium or the like is provided to or exchanged with. As a result, the business card that is more appealing than before can be realized.

In addition, in the business card information management system according to the invention 5, as the business card medium or the like is provided or exchanged, the written information regarding the member, the company, or the attribute of the person is correlated with the business card information. Alternatively, the written information correlated with the business card information is updated to have the content regarding the member, the company, or the attribute of the person. Therefore, the written information can be evolved to have the content that is suitable for the person, or the company or the attribute of the person whom the business card medium or the like is provided to or exchanged with. For example, if the member often does business with a particular department, the written information can be evolved to have the content that is appealing to persons in that department.

In addition, in the business card information management system according to the invention 6, as the business card medium or the like is provided or exchanged, the business card information is correlated with the written information regarding the member, the company, or the attribute of the person for which the frequency of providing or exchanging the business card medium or the like is the highest or more than or equal to a predetermined frequency. Alternatively, the written information correlated with the business card information is updated to have the content regarding the member, the company, or the attribute of the person for which the frequency of providing or exchanging the business card medium or the like is the highest or more than or equal to the predetermined frequency. Therefore, as the business card medium or the like is provided or exchanged more times, the written information can be evolved to have the content that is suitable for the person or the company or the attribute of the person whom the business card medium or the like is provided to or exchanged with more frequently. For example, if the member has come to often do business with a particular department, the written information can be evolved to have the content that appeals to persons in that department.

In addition, in the business card information management system according to the invention 7, for example, the leak and unauthorized use of the business card information by the resignees can be prevented.

### BRIEF DESCRIPTION OF THE DRAWINGS

Fig. 1 is a block diagram illustrating a structure of a network system according to the present embodiment.
Fig. 2 illustrates a hardware structure of a business card information management server 100.
Figs. 3(a) to 3(c) show data structures of a user company information table 400, a user information table 420, and a business card back information table 440.
Figs. 4(a) and 4(b) show data structures of a business card structure information table 460 and a business card exchange information table 480.
Fig. 5 is a sequence flow showing an operation of a company terminal 200, the business card information management server 100, and a company information management server 300 in the case where business card information is registered.
Fig. 6 is a sequence flow showing an operation of the company terminal 200, the business card information management server 100, and a mobile terminal 210 in the case where the business card information is used.
Fig. 7 is a sequence flow showing an operation of the company terminal 200 and the business card information management server 100 in the case where the business cards are printed again.

### DESCRIPTION OF THE EMBODIMENTS

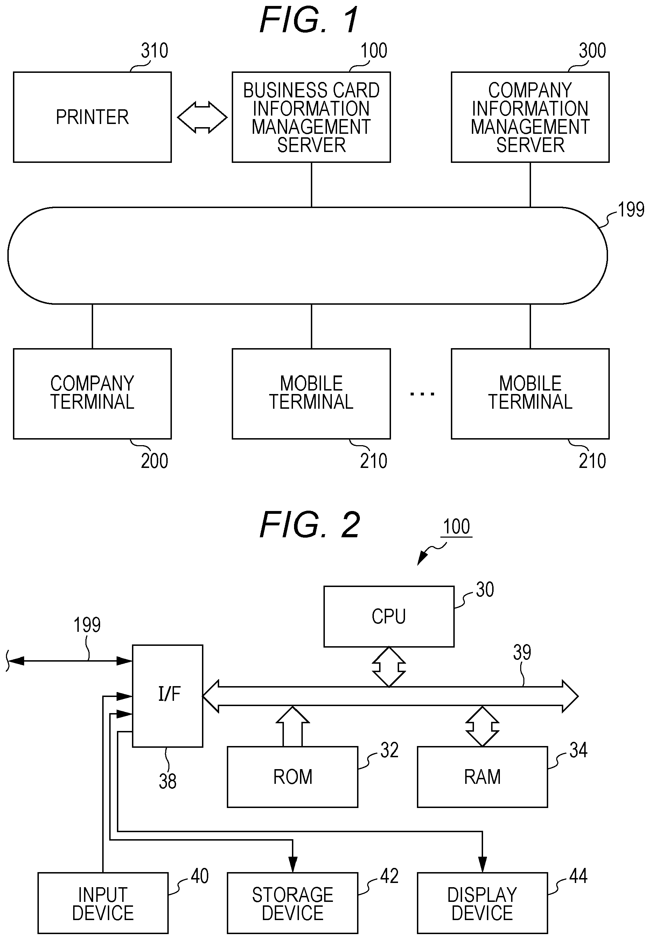

An embodiment of the present invention is hereinafter described. Fig. 1 to Fig. 7 illustrate the present embodiment.

First, a structure of the present embodiment is described. Fig. 1 is a block diagram illustrating a structure of a network system according to the present embodiment.

As illustrated in Fig. 1, a business card information management server 100 that manages business card information, a company terminal 200 to be used by a company that requests management of business card information, a plurality of mobile terminals 210 to be used by members of the company, and a company information management server 300 that manages company information are connected to the Internet 199.

The company information management server 300 receives company name and address together with an inquiry request. If a database contains the corresponding company information, the company information management server 300 searches the database for identification information of the company (such as corporate number), and transmits the obtained identification information.

Next, a structure of the business card information management server 100 is described. Fig. 2 illustrates a hardware structure of the business card information management server 100.

As illustrated in Fig. 2, the business card information management server 100 includes a central processing unit (CPU) 30 that performs calculation and control on the basis of a control program, a read only memory (ROM) 32 that stores the control program of the CPU 30 and the like in advance in a predetermined area, a random access memory (RAM) 34 that stores data read out from the ROM 32 and the like and a calculation result necessary in the calculation process of the CPU 30, and an interface (I/F) 38 that mediates input and output of data to and from external devices. These components are connected to each other with a bus 39, which is a signal line used to transfer data, in a manner that data exchange therebetween is possible.

The external devices connected to the I/F 38 include an input device 40 serving as a human interface and including a keyboard and a mouse, for example, through which data can be input, a storage device 42 storing data, tables, and the like as files, a display device 44 displaying a screen on the basis of an image signal, and a signal line used to connect to the Internet 199.

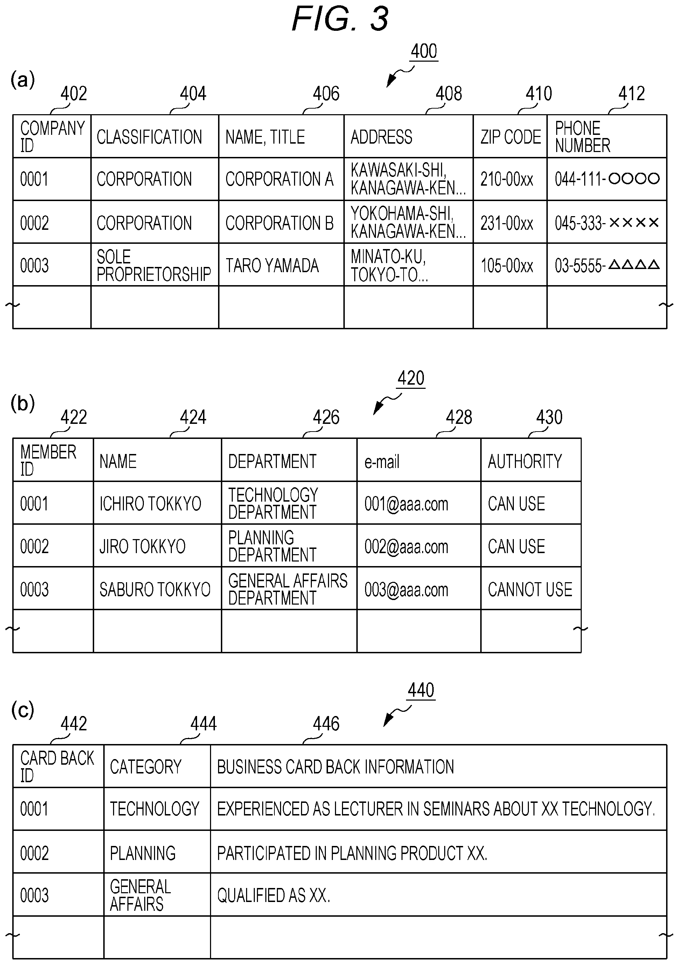

Next, a data structure of the storage device 42 is described. Figs. 3(a) to 3(c) show data structures of a user company information table 400, a user information table 420, and a business card back information table 440.

As shown in Fig. 3(a), the storage device 42 stores the user company information table 400 for registering the information of companies corresponding to users.

In the user company information table 400, one record is registered for each company. Each record includes a field 402 where a company ID for identifying a company is registered, a field 404 where the classification of company (if sole proprietorship, " sole proprietorship"; if corporation, "corporation") is registered, a field 406 where the name or title of the company (if sole proprietorship, "name of sole proprietor"; if the corporation, "name of company") is registered, a field 408 where the address of the company is registered, a field 410 where the zip code of the company is registered, and a field 412 where a telephone number of the company is registered.

As illustrated in Fig. 3(b), the storage device 42 stores the user information table 420 where the information regarding the members of the company corresponding to the user is registered.

The user information table 420 is provided for each company ID. In the user information table 420, one record is registered for each member of the company. Each record includes a field 422 where a member ID for identifying the member is registered, a field 424 where the name of the member is registered, a field 426 where the department of the member is registered, a field 428 where the email address of the member is registered, and a field 430 where the member's authority of using an application in the mobile terminal 210 is registered.

As shown in Fig. 3(c), the storage device 42 stores the business card back information table 440 where business card back information to be printed on a back surface of a business card is registered.

In the business card back information table 440, one record is registered for each piece of business card back information. Each record includes a field 442 where a card back ID for identifying the business card back information is registered, a field 444 where the category of the business card back information is registered, and a field 446 where the business card back information is registered.

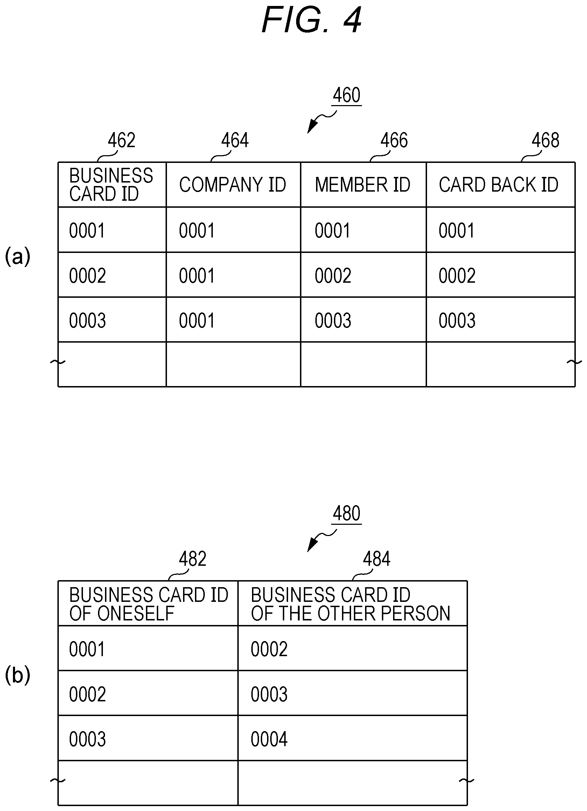

Figs. 4(a) and 4(b) show data structures of a business card structure information table 460 and a business card exchange information table 480.

As shown in Fig. 4(a), the storage device 42 stores the business card structure information table 460 where business card structure information is registered.

In the business card structure information table 460, one record is registered for each member. Each record includes a field 462 where a business card ID for identifying the business card of the member is registered, a field 464 where the company ID of the company where the member belongs is registered, a field 466 where the member ID of the member is registered, and a field 468 where the card back ID of the business card back information printed on the back of the business card of the member is registered. By updating the card back ID in the business card structure information table 460, the business card back information can be changed.

As shown in Fig. 4(b), the storage device 42 stores the business card exchange information table 480 where the business card exchange information expressing a relation of the members with whom the business cards are exchanged is registered.

In the business card exchange information table 480, one record is registered for each combination of the members who have exchanged the business cards. Each record includes a field 482 where the business card ID of one member (oneself) who has exchanged the business card is registered and a field 484 where the business card ID of the other member (the other person) with whom the one member has exchanged the business card is registered.

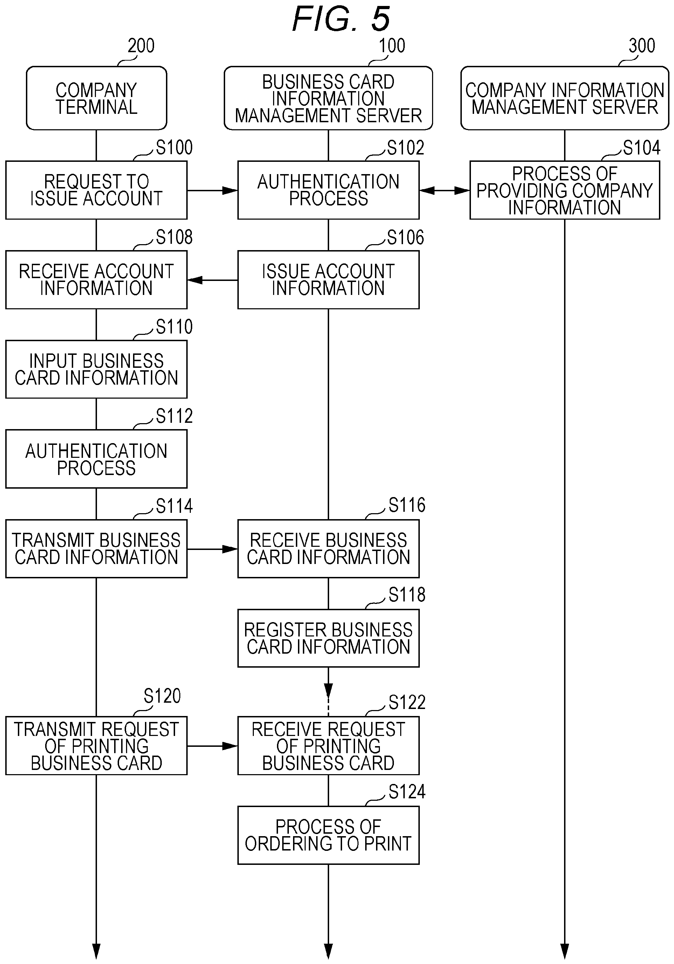

Next, an operation in the present embodiment is described. First, description is made of a case in which the business card information is registered. Fig. 5 is a sequence flow showing an operation of the company terminal 200, the business card information management server 100, and the company information management server 300 in the case where the business card information is registered.

The CPU 30 includes a micro-processing unit (MPU) or the like. The CPU 30 starts a predetermined program stored in a predetermined area of the ROM 32. The business card information management server 100 performs the following process in accordance with the program. Similarly, the company terminal 200 and the company information management server 300 also perform the process in accordance with the program.

In a case of requesting the management of the business card information, the company terminal 200 requests the business card information management server 100 to issue an account (S100). In the request of issuing the account, the company name and address are input.

The business card information management server 100 having received the company name and address in addition to the account issue request transmits the company name and address together with an inquiry request to the company information management server 300.

Upon a reception of the company name and address together with the inquiry request, the company information management server 300, if the database contains the corresponding company information, searches the database for the identification information of the company and transmits the obtained identification information to the business card information management server 100 (S102). If the database does not contain the corresponding company information, the company information management server 300 transmits a notification that the corresponding company information does not exist, to the business card information management server 100.

Upon a reception of the identification number of the company, the business card information management server 100 determines that the company exists and authenticates the company, and then issues account information (for example, ID and password) to the company terminal 200 (S104, S106). On the other hand, if the business card information management server 100 receives the notification that the corresponding company information does not exist, the business card information management server 100 determines that the company does not exist and does not authenticate the company. In this case, the account information is not issued.

Upon a reception of the account information, the company terminal 200 inputs the business card information and the like regarding the company and the members of the company (S108, S110). In this case, the company terminal 200 examines whether to authenticate each member (S112). In one example of the authenticating method, the member is authenticated based on the employee number in an in-house database. The input business card information is transmitted to the business card information management server 100 together with a registration request (S114). Examples of the business card information include the classification, name, address, zip code, and telephone number of the company, and the name, department, email address, authority, and business card back information of each member.

Upon a reception of the business card information together with the registration request, the business card information management server 100 registers the received business card information in the tables 400 to 460 (S116, S118). Among the received business card information, the classification, name, address, zip code, and telephone number of the company are registered in the user company information table 400. The name, department, email address, and authority of each member are registered in the user information table 420. The business card back information is registered in the business card back information table 440. The combination between the business card back information and the business card is registered in the business card structure information table 460. For example, in a case where the business card back information is set in regard to a certain member A who is an experienced lecturer in seminars, an experience as a lecturer in seminars about technology is set as a piece of business card back information regarding a category "technology". In another piece of business card back information regarding a category "planning", an experience as a lecturer in seminars about planning is set. If the member A belongs to a technology department, first, the business card back information regarding the category "technology" is set and this business card is printed. However, afterward, if the member A has come to exchange the business cards with persons in the planning department more frequently, the business card back information regarding the category "planning" is correlated. Thus, in the next printing of the business cards, the lecturer experience in the seminars about planning is printed on the back of the business card. Accordingly, the business card information becomes appealing to those who belong to the planning department. As the business cards are exchanged, the business card information becomes more appealing to others; that is, the business card grows up.

After the business card information is registered, the company terminal 200 transmits a request of printing the business cards to the business card information management server 100 (S120).

Upon a reception of the request of printing the business cards, the business card information management server 100 searches the tables 400 to 460 for the business card information, and transmits the obtained business card information to a printer 310 via email or the like. In addition, the business card information management server 100 orders the printer 310 to print the business cards (S 122, S124). Here, a two-dimensional barcode to be printed on the business card is generated and the generated two-dimensional barcode is included in the business card information. The two-dimensional barcode is generated based on the business card ID in order to correlate the business card. The printer 310 prints the business cards on the basis of the received business card information. On the business cards, the name, address, zip code, and telephone number of the company, the name, department, and email address of the member, the two-dimensional barcode, the business card back information, and other information are printed. The printed business cards are delivered to the company by mail, for example.

Note that the request of printing the business cards can be performed similarly using an application of the mobile terminal 210.

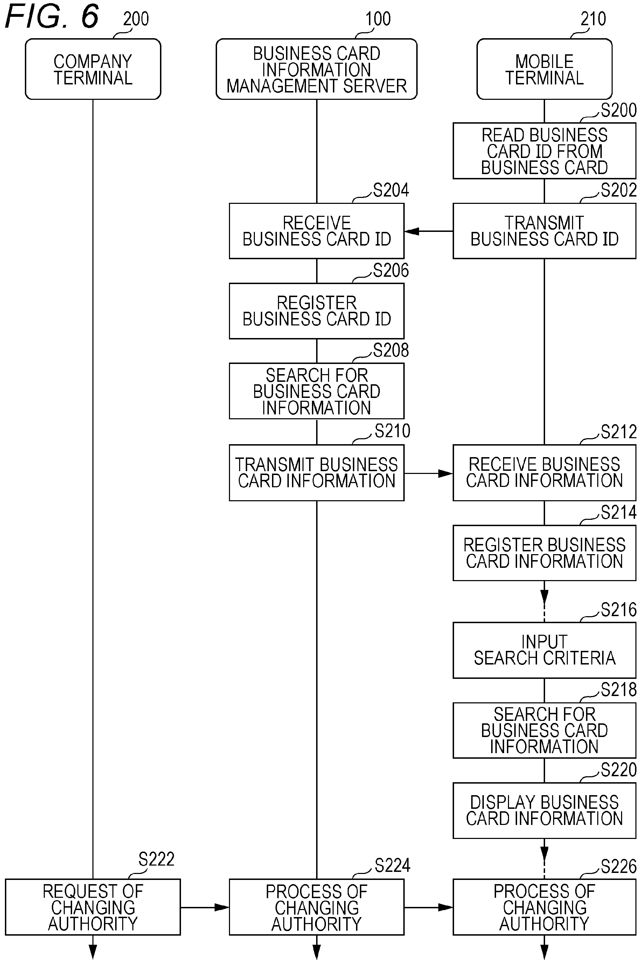

Next, description is made of a case of using the business card information. Fig. 6 is a sequence flow showing an operation of the company terminal 200, the business card information management server 100, and the mobile terminal 210 in the case where the business card information is used.

One example of the mobile terminal 210 is a smart phone including a camera and a touch panel. In the mobile terminal 210, an application of using the business card information through communication with the business card information management server 100 is installed. Activating the application starts a predetermined application program stored in a predetermined area of the ROM. In accordance with the application program, the following process is performed.

When the member exchanges the business cards with a member of another company, the camera of the mobile terminal 210 reads the business card ID through the two-dimensional barcode printed on the business card (S200). When the business card ID is read, the mobile terminal 210 transmits the read business card ID and the business card ID of the member who owns the mobile terminal 210 together with a provision request to the business card information management server 100 (S202).

Upon a reception of the business card ID together with the provision request, the business card information management server 100 registers the business card ID of oneself and the business card ID of the other person in the business card exchange information table 480 (S204, S206). The business card information management server 100 searches the tables 400 to 460 for the business card information correlated with the business card ID of the other person, and transmits the obtained business card information to the mobile terminal 210 (S208, S210).

Upon a reception of the business card information, the mobile terminal 210 registers the received business card information in a database of the application (S212, S214). To look for the business card information, the member inputs search criteria in the mobile terminal 210 (S216). Upon an input of the search criteria, the mobile terminal 210 searches the database for the business card information that matches the input search criteria, and displays the obtained business card information in a touch panel (S220).

On the other hand, in a case where the member resigns from the company, the company terminal 200 transmits an authority change request to the business card information management server 100 so that the resigned member cannot use the application in the mobile terminal 210 after the resignation (S222).

Upon a reception of the authority change request, the business card information management server 100 updates the authority of the user information table 420, and transmits the authority change request to the mobile terminal 210 of the member so that the resigned member cannot use the application after the resignation (S224).

Upon a reception of the authority change request, the mobile terminal 210 changes the authority so that the resigned member cannot use the application after the resignation (S226).

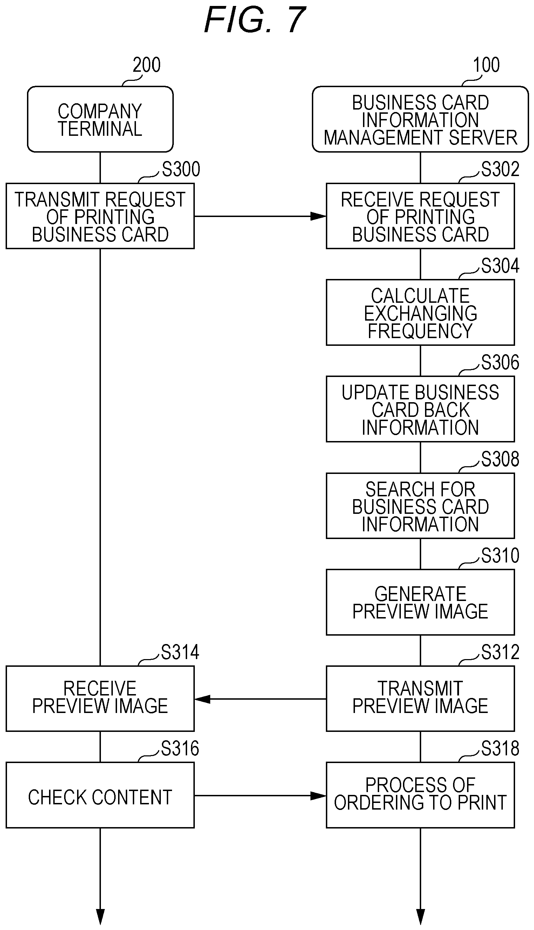

Next, description is made of a case of printing the business cards again. Fig. 7 is a sequence flow showing an operation of the company terminal 200 and the business card information management server 100 in the case where the business cards are printed again.

In the case of printing the business cards again because the business cards have run out, the company terminal 200 transmits the request of printing the business cards to the business card information management server 100 (S300).

Upon a reception of the request of printing the business cards, the business card information management server 100 calculates the frequency of exchanging the business cards for each department of the persons with whom the member who requests the printing has exchanged the business cards on the basis of the business card exchange information table 480, and additionally correlates the business card back information of the category regarding the department for which the calculated frequency is the highest in the business card structure information table 460 (S302 to S306). The business card information management server 100 searches the tables 400 to 460 for the business card information including the new business card back information, generates a business card preview image on the basis of the obtained business card information, and transmits the generated business card preview image to the company terminal 200 (S308 to S312).

Upon a reception of the business card preview image, the company terminal 200 displays the received business card preview image, checks the content, and transmits the result to the business card information management server 100 (S314, S316).

Upon a reception of the result of checking the content, the business card information management server 100 transmits the obtained business card information to the printer 310 via email or the like, and orders the printer 310 to print the business cards (S318). Here, the business card information management server 100 generates the two-dimensional barcode on the basis of the business card ID, and adds the generated two-dimensional barcode to the business card information. The printer 310 prints the business cards on the basis of the received business card information. On the business cards, the name, address, zip code, and telephone number of the company, the name, department, and email address of the member, the two-dimensional barcode, the new business card back information, and other information are printed. The printed business cards are delivered to the company by mail, for example.

Next, an effect of the present embodiment is described. In the present embodiment, the company is authenticated by comparison with the company information in the company information management server 300. Then, the member of the authenticated company is authenticated. The business card information of the authenticated member is registered in the tables 400 to 460. Then, the two-dimensional barcode is generated based on the business card ID. From the two-dimensional barcode printed on the business card, the business card ID is read. The business card information correlated with the business card ID that is read is searched from the tables 400 to 460. Then, the obtained business card information is provided to the mobile terminal 210.

Thus, before the business card information is registered, the company and the member of the company are authenticated; that is, two-step authentication is performed. Therefore, it is possible to reduce the possibility that a third party or a resignee who does not belong to the company but pretends to be the member of the company registers the business card information and misuses the information. Thus, the authenticity of the user can be assured as compared to the conventional technique. In addition, by comparing with the company information, the company can be authenticated. Therefore, the authenticating procedure is easy.

Furthermore, in the present embodiment, the business card exchange information expressing the relation of the member with whom the business card is exchanged is registered in the business card exchange information table 480 on the basis of the business card ID read from the two-dimensional barcode printed on the business card. Then, on the basis of the business card exchange information in the business card exchange information table 480, the correlation of the business card information and the business card back information is updated in the tables 400 to 460.

Thus, when the business card is exchanged, the correlation of the business card information and the business card back information is updated. Therefore, the business card back information can be evolved to have the content that is appealing to the persons with whom the business cards are exchanged. As a result, the business card that is more appealing than before can be realized.

In addition, in the present embodiment, the business card information of the target member is correlated with the business card back information regarding the department of the person with whom the target member has exchanged the business card.

Thus, as the business card is exchanged, the business card information is correlated with the business card back information regarding the department of the person with whom the target member has exchanged the business card. Therefore, the business card back information can be evolved to have the content that is suitable for the department of the person with whom the business card is exchanged. For example, if the member often does business with a particular department, the business card back information can be evolved to have the content that is appealing to persons in that department.

Furthermore, in the present embodiment, the frequency of exchanging the business cards is calculated for each department of the persons with whom the target member who requests the printing has exchanged the business cards. Then, in the business card structure information table 460, the business card back information of the category regarding the department for which the calculated frequency is the highest is correlated.

Thus, as the business card is exchanged, the business card back information of the category regarding the department for which the frequency of exchanging the business cards is the highest is correlated with the business card information. Therefore, as the business cards are exchanged more times, the business card back information can be evolved to have the content that is suitable for the department for which the frequency of exchanging the business cards is high. For example, if the member has come to do business more often with a particular department, the business card back information can be evolved to have the content that is appealing to persons in that department.

In addition, in the present embodiment, the authority of the member is changed so that the member who has resigned cannot use the business card information any more with the mobile terminal 210.

Thus, leak and unauthorized use of the business card information by the resignees can be prevented. In the present embodiment, the mobile terminal 210 corresponds to the business card use terminal in the invention 3, 7, 9, 11, or 13. The company information management server 300 corresponds to the company information storing means in the invention 1, 3, 10, or 11. The tables 400 to 460 correspond to the business card information storing means in any of the inventions 1, 3, 4, and 9 to 13. The business card exchange information table 480 corresponds to the relation information storing means in the invention 4, 9, 12, or 13. Step S102 corresponds to the company authenticating means in the invention 1 or 3, or the company authenticating step in the invention 10 or 11. Step S112 corresponds to the member authenticating means in the invention 1 or 3, or the member authenticating step in the invention 10 or 11.

In the present embodiment, step S118 corresponds to the business card information registering means in the invention 1, 3 or 9, or the business card information registering step in the invention 10, 11, or 13. Step S124 corresponds to the identification information generating means in the invention 3 or 9, or the identification information generating step in the invention 11 or 13. In addition, step S204 corresponds to the identification information acquiring means in the invention 1, 3, 4, or 9, or the identification information acquiring step in any of the inventions 10 to 13. Step S206 corresponds to the relation information registering means in the invention 4 or 9, or the relation information registering step in the invention 12 or 13.

In the present embodiment, step S208 corresponds to the business card information searching means in any of the inventions 1 to 4, and 9, or the business card information searching step in the invention 10, 11, or 13. Step S210 corresponds to the business card information providing means in any of the inventions 2 to 4, and 9, or the business card information providing step in the invention 11 or 13. Step S224 corresponds to the authority changing means in the invention 7, and step S304 corresponds to the frequency calculating means in the invention 6. Step S306 corresponds to the updating means in any of the inventions 4 to 6 and 9, or the updating step in the invention 12 or 13.

In the present embodiment, the business card back information corresponds to the written information in any of the inventions 4 to 6, 9, 12, and 13. The business card exchange information corresponds to the relation information in the invention 4, 9, 12, or 13.

### [Modifications]

In the above embodiment, the business card back information regarding the department of the person with whom the business card is exchanged is correlated. However, the present invention is not limited to this example, and the business card back information regarding the member or the company of the person may be correlated. In addition, the business card back information regarding the attribute of the person (attribute other than department) or the attribute of the company of the person may be correlated.

In the embodiment and the modification described above, the business card back information of the category regarding the department for which the frequency of exchanging the business cards is the highest is correlated in the business card structure information table 460. However, the present invention is not limited to this example, and the business card back information of the category regarding the department for which the frequency of exchanging the business cards is more than or equal to a predetermined frequency may be correlated.

In the embodiment and the modification described above, the correlation of the business card information and the business card back information in the tables 400 to 460 is updated based on the business card exchange information in the business card exchange information table 480. However, the present invention is not limited to this example, and the content of the business card back information correlated with the business card information can be updated.

In the embodiment and the modification, description is not made of editing, adding, or deleting the business card back information in the business card back information table 440. However, editing, adding, or deleting the business card back information can be performed arbitrarily in the company terminal 200 or the mobile terminal 210. The business card back information can be added manually. Alternatively, the business card back information that is generated automatically may be added based on the information obtained from the search through the Internet 199 using a keyword regarding the department.

In the embodiment and the modification described above, the member is authenticated in the company terminal 200. However, the present invention is not limited to this example, and the member can be authenticated in the business card information management server 100 or another terminal.

In the embodiment and the modification described above, the two-dimensional barcode is used. However, the present invention is not limited to this example, and the identification information in another format may be used.

In the embodiment and the modification described above, the information to be printed on the back of the business card is changed. However, the present invention is not limited to this example, and the information to be printed on the front of the business card (such as attention-grabbing sales message, title of position, or qualification) can be changed.

In the embodiment and the modification described above, one piece of information is used as the business card back information. However, the present invention is not limited to this example, and a plurality of pieces of information can be used. For example, the area on the back of the business card may be divided into a plurality of areas. In this case, the information allocated to each area can be changed individually.

In the embodiment and the modification described above, the text information is used as the business card back information. However, the present invention is not limited to this example, and a photograph can be used. For example, a photograph that is selected from among a plurality of prepared photographs of the member's face and that is suitable for a person with whom the member will exchange the business card can be printed on the business card. If the member often exchanges the business card with persons in the technology department, the member can select the photograph in which he is dressed casually. If the member often exchanges the business card with persons in the general affairs department, the member can select the photograph in which he wears a suit. In another example, the photograph that is selected from the prepared photographs for events and parties and that matches the interest of a person with whom the member will exchange the business card may be printed on the business card.

In the embodiment and the modification described above, two pages are printed in one business card. However, in other examples, four pages may be printed in one business card (bi-fold business card with print on both sides) and six pages may be printed in one business card (tri-fold business cards with print on both sides). More pages may be printed in one business card.

In the embodiment and the modification described above, the programs stored in advance in the ROM 32 are executed when the processes in the sequence flows in Fig. 5 to Fig. 7 are performed. However, the present invention is not limited to this example, and the programs may be executed when the programs are read in the RAM 34 from a storage medium that stores programs indicating the procedures.

In the embodiment and the modification described above, the present invention is applied to the exchange of the business cards on which the business card information and the two-dimensional barcode are printed. However, the present invention is not limited to this example, and is also applicable to other cases without departing from the concept of the present invention. For example, the present invention is applicable to the exchange of the business card ID recorded in an information apparatus such as a recording medium or a tablet. In addition to the exchange of the business card, the present invention is also applicable to the one-way provision of the business card to the other person.

### DESCRIPTION OF REFERENCE SIGNS

- 100: Business card information management server
- 30: CPU
- 32: ROM
- 34: RAM
- 38: I/F
- 39: Bus
- 40: Input device
- 42: Storage device
- 44: Display device
- 400: User company information table
- 420: User information table
- 440: Business card back information table
- 460: Business card structure information table
- 480: Business card exchange information table
- 200: Company terminal
- 210: Mobile terminal
- 300: Company information management server
- 310: Printer
- 199: the Internet

## Claims

1. A business card information management system comprising:
a company authenticating means of authenticating a company by comparison with company information in a company information storing means storing the company information;
a member authenticating means of authenticating a member of the company that is authenticated by the company authenticating means;
a business card information registering means of registering in a business card information storing means, business card information of the member that is authenticated by the member authenticating means;
an identification information acquiring means of acquiring identification information correlated with the business card information in the business card information storing means; and
a business card information searching means of searching the business card information storing means for the business card information correlated with the identification information acquired by the identification information acquiring means.

2. The business card information management system according to claim 1, further comprising a business card information providing means of providing the business card information obtained by the business card information searching means.

3. A business card information management system comprising:
a company authenticating means of authenticating a company by comparison with company information in a company information storing means storing the company information;
a member authenticating means of authenticating a member of the company that is authenticated by the company authenticating means;
a business card information registering means of registering in a business card information storing means, business card information of the member that is authenticated by the member authenticating means;
an identification information generating means of generating identification information correlated with the business card information in the business card information storing means;
an identification information acquiring means of acquiring from a business card use terminal, the identification information read from a business card medium in which the identification information generated by the identification information generating means is recorded;
a business card information searching means of searching the business card information storing means for the business card information correlated with the identification information acquired by the identification information acquiring means; and
a business card information providing means of providing the business card information obtained by the business card information searching means to the business card use terminal.

4. The business card information management system according to claim 3, wherein:
the business card information storing means stores the business card information while correlating the business card information with written information that is recorded in the business card medium in association with the business card information; and
the business card information searching means and the business card information providing means search for and provide the business card information and the written information that is correlated with the business card information,
the business card information management system comprising:
a relation information registering means of registering in a relation information storing means, relation information expressing a relation of the member who provides or exchanges the business card medium or the business card information recorded in the business card medium on the basis of the identification information acquired by the identification information acquiring means; and
an updating means of correlating the business card information and the written information in the business card information storing means, or updating the written information correlated with the business card information on the basis of the relation information in the relation information storing means.

5. The business card information management system according to claim 4, wherein the updating means correlates the business card information of a target member with the written information regarding a member, a company of the member, or an attribute of the member of a person whom the target member provides the business card medium or the business card information recorded therein to or exchanges the business card medium or the business card information recorded therein with, or updates the written information correlated with the business card information so as to have a content regarding the member, the company, or the attribute of the person.

6. The business card information management system according to claim 5, further comprising a frequency calculating means of calculating a frequency of providing or exchanging the business card medium or the business card information for each member, company, or attribute of the person, wherein the updating means correlates the business card information of the target member with the written information regarding the member, the company, or the attribute of the person for which the frequency calculated by the frequency calculating means is the highest or more than or equal to a predetermined frequency, or updates the written information correlated with the business card information so as to have a content regarding the member, the company, or the attribute of the person for which the frequency calculated by the frequency calculating means is the highest or more than or equal to the predetermined frequency.

7. The business card information management system according to any one of claims 3 to 6, further comprising an authority changing means of changing an authority of the member so that the member cannot use the business card information in the business card use terminal after a predetermined time.

8. A business card information management system comprising:
an identification information acquiring means of acquiring identification information correlated with business card information in a business card information storing means that stores the business card information and written information while correlating the business card information and the written information with each other;
a relation information registering means of registering in a relation information storing means, relation information expressing a relation of a member who provides or exchanges the business card information on the basis of the identification information acquired by the identification information acquiring means; and
an updating means of correlating the business card information and the written information in the business card information storing means, or updating the written information correlated with the business card information on the basis of the relation information in the relation information storing means.

9. A business card information management system comprising:
a business card information registering means of registering business card information of a member of a company in a business card information storing means while correlating the business card information with written information that is recorded in a business card medium in association with the business card information;
an identification information generating means of generating identification information correlated with the business card information in the business card information storing means;
an identification information acquiring means of acquiring from a business card use terminal, the identification information read from the business card medium in which the identification information generated by the identification information generating means is recorded;
a business card information searching means of searching the business card information storing means for the business card information and the written information correlated with the identification information acquired by the identification information acquiring means;
a business card information providing means of providing the business card information and the written information obtained by the business card information searching means to the business card use terminal;
a relation information registering means of registering in a relation information storing means, relation information expressing a relation of the member who provides or exchanges the business card medium or the business card information recorded in the business card medium on the basis of the identification information acquired by the identification information acquiring means; and
an updating means of correlating the business card information and the written information in the business card information storing means, or updating the written information correlated with the business card information on the basis of the relation information in the relation information storing means.

10. A business card information management program for executing, by a computer, a process comprising:
a company authenticating step of authenticating a company by comparison with company information in a company information storing step storing the company information;
a member authenticating step of authenticating a member of the company that is authenticated by the company authenticating step;
a business card information registering step of registering in a business card information storing step, business card information of the member that is authenticated by the member authenticating step;
an identification information acquiring step of acquiring identification information correlated with the business card information in the business card information storing step; and
a business card information searching step of searching the business card information storing step for the business card information correlated with the identification information acquired by the identification information acquiring step.

11. A business card information management program for executing, by a computer, a process comprising:
a company authenticating step of authenticating a company by comparison with company information in a company information storing step storing the company information;
a member authenticating step of authenticating a member of the company that is authenticated by the company authenticating step;
a business card information registering step of registering in a business card information storing step, business card information of the member that is authenticated by the member authenticating step;
an identification information generating step of generating identification information correlated with the business card information in the business card information storing step;
an identification information acquiring step of acquiring from a business card use terminal, the identification information read from a business card medium in which the identification information generated by the identification information generating step is recorded;
a business card information searching step of searching the business card information storing step for the business card information correlated with the identification information acquired by the identification information acquiring step; and
a business card information providing step of providing the business card information obtained by the business card information searching step to the business card use terminal.

12. A business card information management program for executing, by a computer, a process comprising:
an identification information acquiring step of acquiring identification information correlated with business card information in a business card information storing step that stores the business card information and written information while correlating the business card information and the written information with each other;
a relation information registering step of registering in a relation information storing step, relation information expressing a relation of a member who provides or exchanges the business card information on the basis of the identification information acquired by the identification information acquiring step; and
an updating step of correlating the business card information and the written information in the business card information storing step, or updating the written information correlated with the business card information on the basis of the relation information in the relation information storing step.

13. A business card information management program for executing, by a computer, a process comprising:
a business card information registering step of registering business card information of a member of a company in a business card information storing step while correlating the business card information with written information that is recorded in a business card medium in association with the business card information;
an identification information generating step of generating identification information correlated with the business card information in the business card information storing step;
an identification information acquiring step of acquiring from a business card use terminal, the identification information read from the business card medium in which the identification information generated by the identification information generating step is recorded;
a business card information searching step of searching the business card information storing step for the business card information and the written information correlated with the identification information acquired by the identification information acquiring step;
a business card information providing step of providing the business card information and the written information obtained by the business card information searching step to the business card use terminal;
a relation information registering step of registering in a relation information storing step, relation information expressing a relation of the member who provides or exchanges the business card medium or the business card information recorded in the business card medium on the basis of the identification information acquired by the identification information acquiring step; and
an updating step of correlating the business card information and the written information in the business card information storing step, or updating the written information correlated with the business card information on the basis of the relation information in the relation information storing step.
